# EUROPEAN PATENT APPLICATION

(11) **EP 4 848 416 A1**
(43) Date of publication of application: **02.12.2026**
(21) Application number: 26178478.9
(22) Date of filing: 13.05.2026
(51) Int. Cl.: H01M 50/103, H01M 50/131

(54) **SECONDARY BATTERY**

(30) Priority: 15.05.2025 KR 20250063342
(71) Applicant: SAMSUNG SDI CO., LTD., Yongin-si, Gyeonggi-do 17084 (KR)
(72) Inventor: YUN, Jaehyeon, 17084 Yongin-Si Gyeonggi-do (KR); JEOUNG, Seokyo, 17084 Yongin-Si Gyeonggi-do (KR); OH, Eunseok, 17084 Yongin-Si Gyeonggi-do (KR); JANG, Hanbyeol, 17084 Yongin-Si Gyeonggi-do (KR)
(74) Representative: Meissner Bolte Partnerschaft mbB

(57) **Abstract**

A secondary battery (100) includes: an electrode assembly (200); a first case (300) having one open side, and accommodating the electrode assembly (200); and a second case (400) sealing the one open side of the first case (300). The first case (300) includes: a bottom surface (331) on which the electrode assembly (200) is located; and a side wall portion protruding in a vertical direction along a perimeter of the bottom surface (331). At least one corner (344) defined by the bottom surface (331) and the side wall portion has a rounded shape in which a plurality of curves (351, 361, 371) cross each other.

## Description

### BACKGROUND

### 1. Field

The present invention relates to a secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

A secondary battery having high energy density (e.g., the amount of energy that may be stored per unit volume) may provide a longer run time or a longer driving range in a portable device or an electric vehicle. In other words, the energy density of a secondary battery may be one of the important factors that determines the performance of the secondary battery. Accordingly, various technologies for increasing the energy density through a structural improvement of a case of a secondary battery have been proposed.

The above information disclosed in this Background section is for enhancement of understanding of the background of the present invention, and therefore, it may contain information that does not constitute related (or prior) art.

### SUMMARY

Embodiments of the present invention may be directed to a secondary battery having an improved energy density.

These and other aspects and features of the present invention will be described in or will be apparent from the following description of embodiments of the present invention.

According to the present invention, a secondary battery includes: an electrode assembly; a first case having one open side, and accommodating the electrode assembly; and a second case sealing the one open side of the first case. The first case includes: a bottom surface on which the electrode assembly is located; and a side wall portion protruding in a vertical direction along a perimeter of the bottom surface. At least one corner defined by the bottom surface and the side wall portion has a rounded shape in which a plurality of curves cross each other.

In an embodiment, the first case may include: a first side wall extending vertically from the bottom surface; a first connection portion connecting the bottom surface and the first side wall to each other, and having a first radius of curvature; a second side wall extending vertically from the bottom surface, and orthogonally located with respect to the first side wall; a second connection portion connecting the bottom surface and the second side wall to each other, and having a second radius of curvature; and a third connection portion connecting the first side wall and the second side wall to each other, and having a third radius of curvature.

In an embodiment, the plurality of curves may include: a first curve connecting a point where the first connection portion ends and the second side wall to each other in a first direction parallel to the first side wall; a second curve connecting a point where the second connection portion ends and the first side wall to each other in a second direction parallel to the second side wall; and a third curve connecting a point where the third connection portion ends and the bottom surface to each other in a third direction perpendicular to the first direction and the second direction.

In an embodiment, the first curve may include a first inflection point where a radius of curvature changes, the second curve may include a second inflection point where a radius of curvature changes, the third curve may include a third inflection point where a radius of curvature changes, and a vertex of the corner may be defined by where the first inflection point, the second inflection point, and the third inflection point meet each other.

In an embodiment, the first curve may include: a (1-1)-th curve connected to the second side wall, and having a (1-1)-th radius of curvature; and a (1-2)-th curve extending from the (1-1)-th curve and connected to the point where the first connection portion ends, the (1-2)-th curve having a (1-2)-th radius of curvature.

In an embodiment, the (1-1)-th radius of curvature may have a value according to R1-1=(R2+R3)/(D2+D3)×V1, where R2 may be the second radius of curvature, R3 may be the third radius of curvature, D2 may be a second interval from the point where the second connection portion ends to a point where the third radius of curvature starts based on the second direction, D3 may be a third interval from the point where the third connection portion ends to a point where the second radius of curvature starts based on the third direction, and V1 may be 2.7 to 2.9.

In an embodiment, the second interval and the third interval may be 1.0 mm to 3.5 mm.

In an embodiment, the (1-2)-th radius of curvature may have a value according to R1-2=(R2+R3)/(D2+D3)×V2, where R2 may be the second radius of curvature, R3 may be the third radius of curvature, D2 may be a second interval from the point where the second connection portion ends to a point where the third radius of curvature starts based on the second direction, D3 may be a third interval from the point where the third connection portion ends to a point where the second radius of curvature starts based on the third direction, and V2 may be 2.8 to 3.1.

In an embodiment, the second interval and the third interval may be 1.0 mm to 3.5 mm.

In an embodiment, the second curve may include: a (2-1)-th curve connected to the first side wall, and having a (2-1)-th radius of curvature; and a (2-2)-th curve extending from the (2-1)-th curve and connected to the point where the second connection portion ends, the (2-2)-th curve having a (2-2)-th radius of curvature.

In an embodiment, the (2-1)-th radius of curvature may have a value according to R2-1=(R1+R3)/(D1+D3)×V3, where R1 may be the first radius of curvature, R3 may be the third radius of curvature, D1 may be a first interval from the point where the first connection portion ends to a point where the third radius of curvature starts based on the first direction, D3 may be a third interval from the point where the third connection portion ends to a point where the second radius of curvature starts based on the third direction, and V3 may be 2.7 to 2.9.

In an embodiment, the first interval and the third interval may be 1.0 mm to 3.5 mm.

In an embodiment, the (2-2)-th radius of curvature may have a value according to R2-2=(R1+R3)/(D1+D3)×V4, where R1 may be the first radius of curvature, R3 may be the third radius of curvature, D1 may be a first interval from the point where the first connection portion ends to a point where the third radius of curvature starts based on the first direction, D3 may be a third interval from the point where the third connection portion ends to a point where the second radius of curvature starts based on the third direction, and V4 may be 2.8 to 3.1.

In an embodiment, the first interval and the third interval may be 1.0 mm to 3.5 mm.

In an embodiment, the third curve may include: a (3-1)-th curve connected to the bottom surface, and having a (3-1)-th radius of curvature; and a (3-2)-th curve extending from the (3-1)-th curve and connected to the point where the third connection portion ends, the (3-2)-th curve having a (3-2)-th radius of curvature.

In an embodiment, the (3-1)-th radius of curvature may have a value according to R3-1=(R1+R2)/(D1+D2)×V5, where R1 may be the first radius of curvature, R2 may be the second radius of curvature, D1 may be a first interval from the point where the first connection portion ends to a point where the third radius of curvature starts based on the first direction, D2 may be a second interval from the point where the second connection portion ends to a point where the third radius of curvature starts based on the second direction, and V5 may be 1.2 to 1.4.

In an embodiment, the first interval and the second interval may be 1.0 mm to 3.5 mm.

In an embodiment, the (3-2)-th radius of curvature may have a value according to R3-2=(R1+R2)/(D1+D2)×V6, where R1 may be the first radius of curvature, R2 may be the second radius of curvature, D1 may be a first interval from the point where the first connection portion ends to a point where the third radius of curvature starts based on the first direction, D2 may be a second interval from the point where the second connection portion ends to a point where the third radius of curvature starts based on the second direction, and V6 may be 3.3 to 4.5.

In an embodiment, the first interval and the second interval may be from 1.0 mm to 3.5 mm.

In an embodiment, at least one of the first case or the second case may include Stainless Use Steel (SUS).

According to some embodiments of the present invention, each corner of a side wall portion of a case body of a secondary battery may be formed in or have a rounded shape in which a plurality of curves intersect or cross one another, thereby increasing a space in which an electrode assembly is accommodated inside the case body.

According to some embodiments of the present invention, the energy density of a secondary battery may be increased by increasing a space for accommodating an electrode assembly in a case body of the secondary battery.

However, aspects and features of the present invention are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present invention, and further describe aspects and features of the present invention together with the detailed description of the present invention. Thus, the present invention should not be construed as being limited to the drawings.
FIG. 1 is an exploded perspective view illustrating an example of a secondary battery according to some embodiments of the present invention.
FIG. 2 is a perspective view illustrating an example of a secondary battery according to some embodiments of the present invention.
FIG. 3 is a rear perspective view illustrating an example of a case body of a secondary battery according to some embodiments of the present invention.
FIG. 4 is an enlarged perspective view illustrating an example of the area A of FIG. 3.
FIG. 5 is a cross-sectional view illustrating an example of a first connection portion by cutting a case body of a secondary battery according to some embodiments of the present invention.
FIG. 6 is a cross-sectional view illustrating an example of a second connection portion by cutting a case body of a secondary battery according to some embodiments of the present invention.
FIG. 7 is a cross-sectional view illustrating an example of a third connection portion by cutting a case body of a secondary battery according to some embodiments of the present invention.
FIG. 8 is a plan view illustrating an example of a corner in a direction facing a first side wall of a case body of a secondary battery according to some embodiments of the present invention.
FIG. 9 is a plan view illustrating an example of a corner in a direction facing a second side wall of a case body of a secondary battery according to some embodiments of the present invention.
FIG. 10 is a perspective view illustrating an example of a first curve forming a corner in a case body of a secondary battery according to some embodiments of the present invention.
FIG. 11 is a cross-sectional view illustrating an example of a cut portion of a first curve forming a corner in a case body of a secondary battery according to some embodiments of the present invention.
FIG. 12 is a perspective view illustrating an example of a second curve forming a corner in a case body of a secondary battery according to some embodiments of the present invention.
FIG. 13 is a cross-sectional view illustrating an example of a cut portion of a second curve forming a corner in a case body of a secondary battery according to some embodiments of the present invention.
FIG. 14 is a perspective view illustrating an example of a third curve forming a corner in a case body of a secondary battery according to some embodiments of the present invention.
FIG. 15 is a cross-sectional view illustrating an example of a cut portion of a third curve forming a corner in a case body of a secondary battery according to some embodiments of the present invention.

### DETAILED DESCRIPTION

Hereinafter, embodiments of the present invention will be described, in detail, with reference to the accompanying drawings. The terms or words used in the present specification and claims are not to be limitedly interpreted as general or dictionary meanings and should be interpreted as meanings and concepts that are consistent with the technical idea of the present invention on the basis of the principle that an inventor can be his/her own lexicographer to appropriately define concepts of terms to describe his/her invention in the best way.

The embodiments described in this specification and the configurations shown in the drawings are only some of the embodiments of the present invention and do not represent all of the technical spirit, aspects, and features of the present invention. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local Patent Law.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (or under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

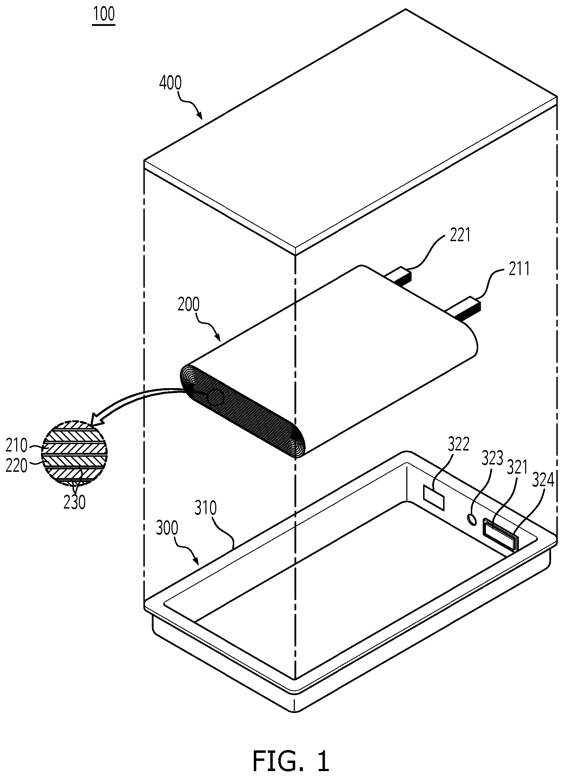

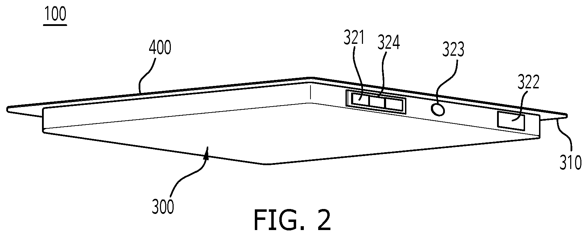

FIG. 1 is an exploded perspective view illustrating an example of a secondary battery according to some embodiments of the present invention. FIG. 2 is a perspective view illustrating an example of a secondary battery according to some embodiments of the present invention.

Referring to FIG. 1 and FIG. 2, a secondary battery 100 according to some embodiments of the present invention may include an electrode assembly 200, a first case 300 in which the electrode assembly 200 is accommodated through one open side, and a second case (e.g., a cover) 400 for sealing the one open side of the first case 300.

The electrode assembly 200 may be formed by winding or stacking a stack of a first electrode 210, a separator 230, and a second electrode 220, which are formed as thin plates or films. When the electrode assembly 200 is a wound stack, a winding axis may be parallel to the longitudinal direction of the case. In other embodiments, the electrode assembly 200 may be a stack type rather than a winding type, and the shape of the electrode assembly 200 is not limited in the present invention. In addition, the electrode assembly 200 may be a Z-stack electrode assembly 200 in which a positive electrode plate and a negative electrode plate are inserted into both sides of a separator 230, which is then bent into a Z-stack. In addition, one or more electrode assemblies may be stacked such that long sides of the electrode assemblies are adjacent to each other and accommodated in the case, and the number of electrode assemblies in the case is not limited in the present invention. The first electrode 210 of the electrode assembly 200 may act as a negative electrode, and the second electrode 220 may act as a positive electrode. Of course, the reverse is also possible.

The first electrode 210 may be formed by applying a first electrode active material, such as graphite or carbon, to a first electrode current collector formed of a metal foil, such as copper, a copper alloy, nickel, or a nickel alloy. The first electrode 210 may include a first electrode tab 211 (e.g., a first uncoated portion) that is a region to which the first electrode active material is not applied. The first electrode tab 211 may act as a current flow path between the first electrode 210 and the first current collector. In some embodiments, when the first electrode 210 is manufactured, the first electrode tab 211 may be formed by being cut in advance to protrude to one side of the electrode assembly 200, or the first electrode tab 211 may protrude to one side of the electrode assembly 200 more than (e.g., farther than or beyond) the separator 230 without being separately cut.

The second electrode 220 may be formed by applying a second electrode active material, such as a transition metal oxide, on a second electrode current collector formed of a metal foil, such as aluminum or an aluminum alloy. The second electrode 220 may include a second electrode tab 221 (e.g., a second uncoated portion) that is a region to which the second electrode active material is not applied. The second electrode tab 221 may act as a current flow path between the second electrode 220 and the second current collector. In some embodiments, the second electrode tab 221 may be formed by being cut in advance to protrude to the other side (e.g., the opposite side) of the electrode assembly 200 when the second electrode 220 is manufactured, or the second electrode 220 may protrude to the other side of the electrode assembly 200 more than (e.g., farther than or beyond) the separator 230 without being separately cut.

The first case 300 and the second case 400 may form the overall appearance of the secondary battery 100. At least one of the first case 300 or the second case 400 may include stainless use steel (SUS). However, the present invention is not limited thereto, and the first case 300 and the second case 400 may be formed of a conductive metal, such as aluminum, an aluminum alloy, or steel plated with nickel.

The first case 300 may have one open side so that the electrode assembly 200 can be accommodated therein. The second case 400 may be coupled to the one open side of the first case 300 to be sealed.

In some embodiments, the first case 300 has a flange portion 310 formed along a perimeter (e.g., a circumference) of the open side, and the second case 400 is arranged on the flange portion 310. The first case 300 and the second case 400 may be coupled together by welding. After the second case 400 is welded to the flange portion 310, an outer area of the welded portion may be removed by cutting.

A first electrode terminal 321 and the second electrode terminal 322 may be disposed to be spaced apart from each other in the first case 300. The first electrode terminal 321 may be coupled to a first electrode tab 211 of a first electrode 210 of the electrode assembly 200 to be electrically connected. The second electrode terminal 322 may be coupled to a second electrode tab 221 of a second electrode 220 of the electrode assembly 200 to be electrically connected.

Any one of the first electrode terminal 321 or the second electrode terminal 322 may be disposed to be electrically insulated from the first case 300. In an embodiment, when the first case 300 functions as a negative electrode and the first electrode terminal 321 functions as a positive electrode, an insulating member 324 may be further provided between the first electrode terminal 321 and the first case 300. The first electrode terminal 321 may function as a positive electrode while being insulated from the first case 300, and the second electrode terminal 322 may function as a negative electrode while being in contact with the first case 300. However, the present invention is not limited thereto, and the second electrode terminal 322 may also be disposed to be electrically insulated from the first case 300.

An electrolyte injection hole 323 may be formed in the first case 300 to inject an electrolyte therein. The electrolyte injection hole 323 may be formed between the first electrode terminal 321 and the second electrode terminal 322. However, the present invention is not limited thereto, and a position (e.g., a forming position) of the electrolyte injection hole 323 may be variously modified as needed or desired.

The first case 300 may include a bottom surface on which an electrode assembly 200 is disposed, and a side wall portion protruding vertically around the perimeter of the bottom surface. At least one corner formed by the bottom surface and the side wall portion may be formed in a rounded shape by intersecting a plurality of curves. A size of a corner may be reduced to increase an internal space of the first case 300 by optimizing a radius of curvature of the plurality of curves formed at the corner of the first case 300.

In some embodiments, the second case 400 may be formed in the same or similar shape as that of the first case 300 so that an electrode assembly may also be accommodated in the second case 400. In some embodiments, the second case may have one open side so that an electrode assembly may also be accommodated therein, and a flange portion may be formed along a circumference of the one open side. The flange portion of the first case 300 and the flange portion of the second case 400 may be disposed to face each other after electrode assemblies are accommodated in the first case 300 and the second case 400, respectively, and then coupled together through welding.

In some embodiments, the second case 400 may include a bottom surface on which the electrode assembly 200 is disposed, and a side wall portion protruding in a vertical direction along the perimeter (e.g., the circumference) of the bottom surface. In this case, a feature regarding a corner of the first case 300 described in more detail below may also be applied to the second case 400.

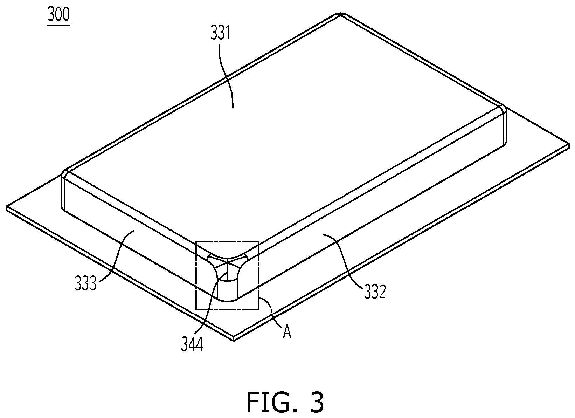

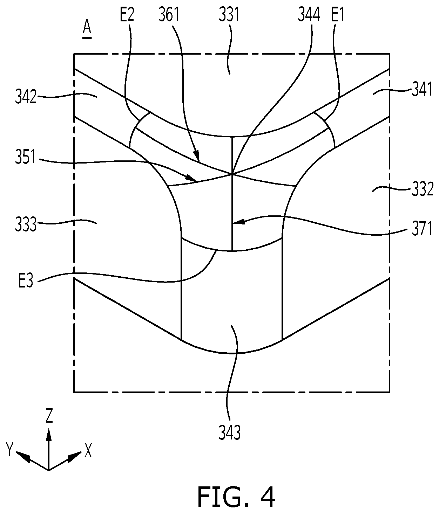

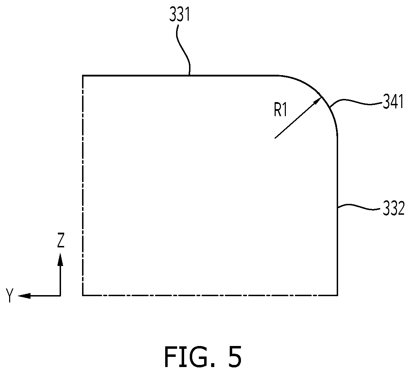

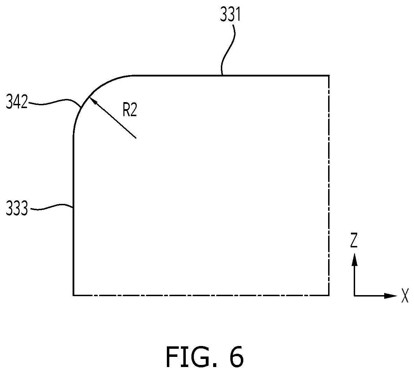

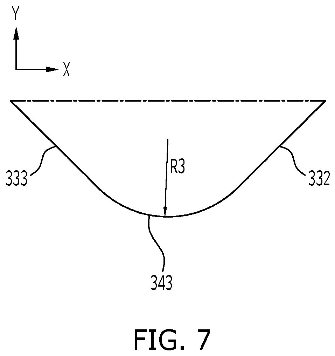

FIG. 3 is a rear perspective view illustrating an example of a case body of a secondary battery according to some embodiments of the present invention. FIG. 4 is an enlarged perspective view illustrating an example of the area A of FIG. 3. FIG. 5 is a cross-sectional view illustrating an example of a first connection portion by cutting a case body of a secondary battery according to some embodiments of the present invention. FIG. 6 is a cross-sectional view illustrating an example of a second connection portion by cutting a case body of a secondary battery according to some embodiments of the present invention. FIG. 7 is a cross-sectional view illustrating an example of a third connection portion by cutting a case body of a secondary battery according to some embodiments of the present invention.

Referring to FIG. 3 and FIG. 4, the first case 300 may include a bottom surface 331 on which an electrode assembly 200 is disposed, and a side wall portion protruding in a vertical direction along the perimeter (e.g., the circumference) of the bottom surface 331. In some embodiments, as shown in FIG. 3, when the bottom surface 331 has a square shape, four side wall portions may be formed along the perimeter (e.g., the circumference) of the bottom surface 331. A corner may be formed by the bottom surface 331 and the side wall portion. In other words, the bottom surface 331 and two side wall portions may meet each other to form one corner.

In some embodiments, the first case 300 may include the bottom surface 331, a first side wall 332 disposed vertically relative to the bottom surface 331, a first connection portion 341 connecting the bottom surface 331 and the first side wall 332 to each other, a second side wall 333 disposed vertically relative to the bottom surface 331 and orthogonal to the first side wall 332, a second connection portion 342 connecting the bottom surface 331 and the second side wall 333 to each other, and a third connection portion 343 connecting the first side wall 332 and the second side wall 333 to each other.

A corner 344 may be formed at a point where the bottom surface 331, the first side wall 332, and the second side wall 333 meet each other. The corner 344 may be formed in a rounded shape in which a plurality of curves intersect each other. By optimizing the radius of curvature of the plurality of curves, the size of the corner 344 may be reduced to increase the internal space of the first case 300.

Referring to FIG. 4, in some embodiments, the plurality of curves may include a first curve 351, a second curve 361, and a third curve 371. The first curve 351 may be a curve connecting an end point E1 of the first connection portion 341 and the second side wall 333 to each other in a first direction X parallel to or substantially parallel to the first side wall 332. The second curve 361 may be a curve connecting an end point E2 of the second connection portion 342 and the first side wall 332 to each other in a second direction Y parallel to or substantially parallel to the second side wall 333. The third curve 371 may be a curve connecting an end point E3 of the third connection portion 343 and the bottom surface 331 to each other in a third direction Z perpendicular to or substantially perpendicular to the first direction X and the second direction Y.

The corner 344 may be formed by connecting curved surfaces formed by the first curve 351, the second curve 361, and the third curve 371 to each other. A vertex of the corner 344 may be a point where the first curve 351, the second curve 361, and the third curve 371 intersect or cross each other.

Referring to FIG. 5, the first connection portion 341 may connect the bottom surface 331 and the first side wall 332 to each other, and may be formed to have a first radius of curvature R1 based on a plane formed by the second direction Y and the third direction Z.

Referring to FIG. 6, the second connection portion 342 may connect the bottom surface 331 and the second side wall 333 to each other, and may be formed to have a second radius of curvature R2 based on a plane formed by the first direction X and the third direction Z.

Referring to FIG. 7, the third connection portion 343 may connect the first side wall 332 and the second side wall 333 to each other, and may be formed to have a third radius of curvature R3 based on a plane formed by the first direction X and the second direction Y.

In some embodiments, the first radius of curvature R1 and the second radius of curvature R2 may be the same or substantially the same as each other, and the third radius of curvature R3 may be formed to be greater than the first radius of curvature R1. However, the present invention is not limited thereto, and the sizes of the radius of curvatures may be variously modified depending on the size, thickness, and the like of the first case 300.

The first radius of curvature R1 of the first connection portion 341, the second radius of curvature R2 of the second connection portion 342, and the third radius of curvature R3 of the third connection portion 343 may be used as values (e.g., as set values) for calculating the radius of curvature of a curve described in more detail below.

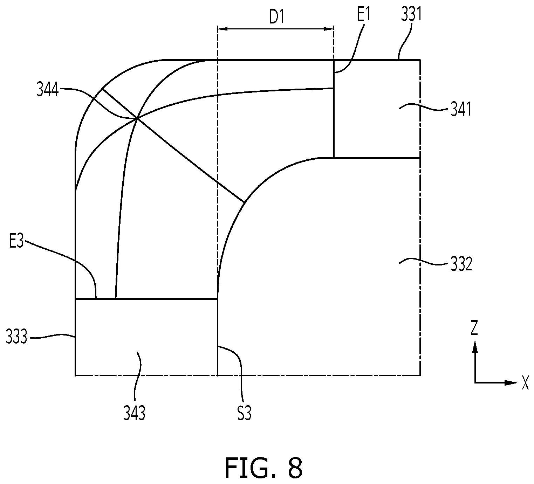

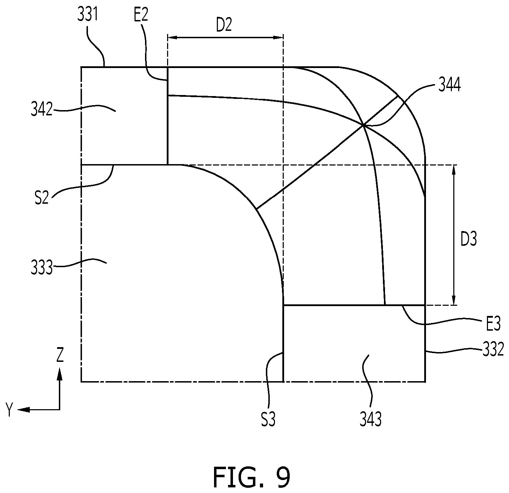

FIG. 8 is a plan view illustrating an example of a corner in a direction facing a first side wall of a case body of a secondary battery according to some embodiments of the present invention. FIG. 9 is a plan view illustrating an example of a corner in a direction facing a second side wall of a case body of a secondary battery according to some embodiments of the present invention.

Referring to FIG. 8 and FIG. 9, a round corner 344 where a plurality of curves intersect or cross each other may be formed between an end point E1 of a first connection portion 341, an end point E2 of a second connection portion 342, and an end point E3 of a third connection portion 343.

A method for calculating a first interval D1, a second interval D2, and a third interval D3, which are values (e.g., set values) for calculating the radius of curvature of a curve described in more detail below, will now be described with reference to FIG. 8 and FIG. 9.

Referring to FIG. 4 to FIG. 8, the first interval D1 may be an interval from the end point E1 of the first connection portion 341 to a start point S3 of a third radius of curvature R3 based on a first direction X.

The end point E1 of the first connection portion 341 may be a boundary line between a start point of a plurality of curves for forming the corner 344 and the first connection portion 341 based on the first direction X. Therefore, the end point E1 of the first connection portion 341 may be a last point that satisfies a first radius of curvature R1.

The start point S3 of the third radius of curvature R3 may be a boundary line between the first side wall 332 and the third connection portion 343 based on the first direction X. Therefore, the start point S3 of the third radius of curvature R3 may be a point where a curve forming the third radius of curvature R3 starts.

Referring to FIG. 4 to FIG. 9, the second interval D2 may be an interval from an end point E2 of the second connection portion 342 to the start point S3 of the third radius of curvature R3 based on the second direction Y.

The end point E2 of the second connection portion 342 may be a boundary line, with reference to the second direction Y, between a start point of a plurality of curves for forming the corner 344 and the second connection portion 342. Therefore, the end point E2 of the second connection portion 342 may be a last point that satisfies a second radius of curvature R2.

Referring to FIG. 4 to FIG. 9, the third interval D3 may be an interval from the end point E3 of the third connection portion 343 to a start point S2 of the second radius of curvature R2 based on the third direction Z.

The end point E3 of the third connection portion 343 may be a boundary line between a start point of a plurality of curves for forming the corner 344 and the third connection portion 343 based on the third direction Z. Therefore, the end point E3 of the third connection portion 343 may be a last point that satisfies the third radius of curvature R3.

The start point S2 of the second radius of curvature R2 may be a boundary line between the second side wall 333 and the second connection portion 342 based on the third direction Z. Therefore, the start point S2 of the second radius of curvature R2 may be a point where a curve forming the second radius of curvature R2 starts.

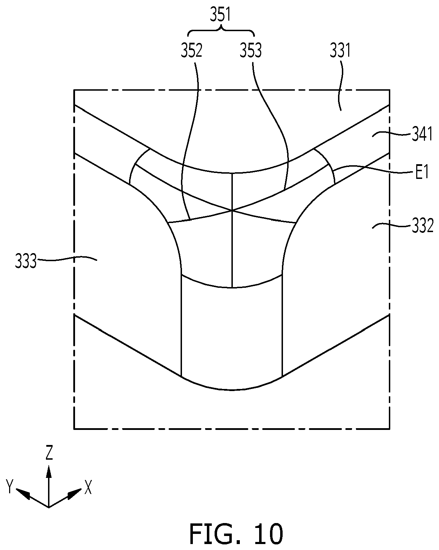

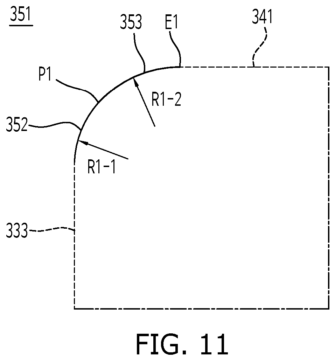

FIG. 10 is a perspective view illustrating an example of a first curve forming a corner in a case body of a secondary battery according to some embodiments of the present invention. FIG. 11 is a cross-sectional view illustrating an example of a cut portion of a first curve forming a corner in a case body of a secondary battery according to some embodiments of the present invention.

Referring to FIG. 4 to FIG. 11, a first curve 351 may be a form in which a plurality of curves having different radii of curvature are connected to each other. In some embodiments, the first curve 351 may include a (1-1)-th curve 352 connected to the second side wall 333, and a (1-2)-th curve 353 extending from the (1-1)-th curve 352 and connected to an end point E1 of the first connection portion 341. The (1-1)-th curve 352 may have a (1-1)-th radius of curvature R1-1, and the (1-2)-th curve 353 may have a (1-2)-th radius of curvature R1-2.

The (1-1)-th radius of curvature R1-1 may be calculated by the following Equation 1. Equation 1: $R 1 - 1 = \left(R2+R3\right) / \left(D2+D3\right) \times V 1$

In Equation 1, R2 may be a second radius of curvature R2 of the second connection portion 342, and R3 may be a third radius of curvature R3 of the third connection portion 343. D2 may be a second interval D2 from an end point E2 of the second connection portion 342 to a start point S3 of a third radius of curvature R3 based on a second direction Y. D3 may be a third interval D3 from an end point E3 of the third connection portion 343 to a start point S2 of the second radius of curvature R2 based on the third direction Z. V1 is a variable value (e.g., a set variable value), and may be about 2.7 to 2.9.

The second radius of curvature R2 and the third radius of curvature R3 are preset values, and one value may be selected from a range of about 2.7 to 2.9 for V1. A second interval D2 and a third interval D3 may be calculated by the method described above with reference to FIG. 8 and FIG. 9. A second interval D2 and a third interval D3 may be values in a range of about 1.0 mm to 3.5 mm.

The (1-2)-th radius of curvature R1-2 may be calculated by the following Equation 2. Equation 2: $R 1 - 2 = \left(R2+R3\right) / \left(D2+D3\right) \times V 2$

In Equation 2, R2 may be a second radius of curvature R2 of the second connection portion 342, and R3 may be a third radius of curvature R3 of the third connection portion 343. D2 may be a second interval D2 from an end point E2 of the second connection portion 342 to a start point S3 of the third radius of curvature R3 based on the second direction Y. D3 may be a third interval D3 from an end point E3 of the third connection portion 343 to a start point S2 of the second radius of curvature R2 based on the third direction Z. V2 is a variable value (e.g., a set variable value), and may be about 2.8 to 3.1.

The second radius of curvature R2 and the third radius of curvature R3 are preset values, and one value may be selected from a range of about 2.8 to 3.1 for V2. A second interval D2 and a third interval D3 may be calculated by the method described above with reference to FIG. 8 and FIG. 9. A second interval D2 and a third interval D3 may be values in a range of about 1.0 mm to 3.5 mm.

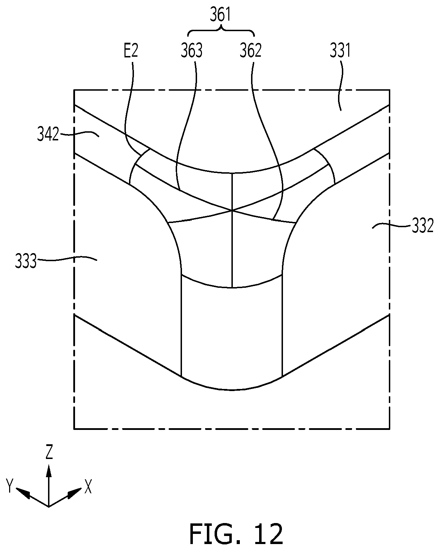

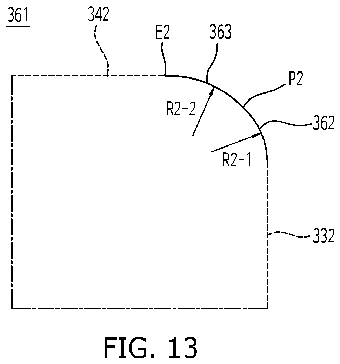

FIG. 12 is a perspective view illustrating an example of a second curve forming a corner in a case body of a secondary battery according to some embodiments of the present invention. FIG. 13 is a cross-sectional view illustrating an example of a cut portion of a second curve forming a corner in a case body of a secondary battery according to some embodiments of the present invention.

Referring to FIG. 4 to FIG. 13, a second curve 361 may be a form in which a plurality of curves having different radii of curvature are connected to each other. In some embodiments, the second curve 361 may include a (2-1)-th curve 362 connected to the first side wall 332, and a (2-2)-th curve 363 extending from the (2-1)-th curve 362 and connected to an end point E2 of the second connection portion 342. The (2-1)-th curve 362 may have a (2-1)-th radius of curvature R2-1, and the (2-2)-th curve 363 may have a (2-2)-th radius of curvature R2-2.

The (2-1)-th radius of curvature R2-1 may be calculated by the following Equation 3. Equation 3: $R 2 - 1 = \left(R1+R3\right) / \left(D1+D3\right) \times V 3$

In Equation 3, R1 may be a first radius of curvature R1 of the first connection portion 341, and R3 may be a third radius of curvature R3 of the third connection portion 343. D1 may be a first interval D1 from an end point E1 of the first connection portion 341 to a start point S3 of a third radius of curvature R3 based on a first direction X. D3 may be a third interval D3 from an end point E3 of the third connection portion 343 to a start point S2 of a second radius of curvature R2 based on a third direction Z. V3 may be about 2.7 to 2.9 as a variable value (e.g., a set variable value).

A first radius of curvature R1 and a third radius of curvature R3 are preset values, and one value may be selected from a range of about 2.7 to 2.9 for V3. A first interval D1 and a third interval D3 may be calculated by the method described above with reference to FIG. 8 and FIG. 9. A first interval D1 and a third interval D3 may be values in a range of about 1.0 mm to 3.5 mm.

The (2-2)-th radius of curvature R2-2 may be calculated by the following Equation 4. Equation 4: $R 2 - 2 = \left(R1+R3\right) / \left(D1+D3\right) \times V 4$

In Equation 4, R1 may be a first radius of curvature R1 of the first connection portion 341, and R3 may be a third radius of curvature R3 of the third connection portion 343. D1 may be a first interval D1 from an end point E1 of the first connection portion 341 to a start point S3 of a third radius of curvature R3 based on a first direction X. D3 may be a third interval D3 from an end point E3 of the third connection portion 343 to a start point S2 of a second radius of curvature R2 based on the third direction Z. V4 is a variable value (e.g., a set variable value), and may be about 2.8 to 3.1.

A first radius of curvature R1 and a third radius of curvature R3 are preset values, and one value may be selected from a range of about 2.8 to 3.1 for V4. A first interval D1 and a third interval D3 may be calculated by the method described above with reference to FIG. 8 and FIG. 9. A first interval D1 and a third interval D3 may be values in a range of about 1.0 mm to 3.5 mm.

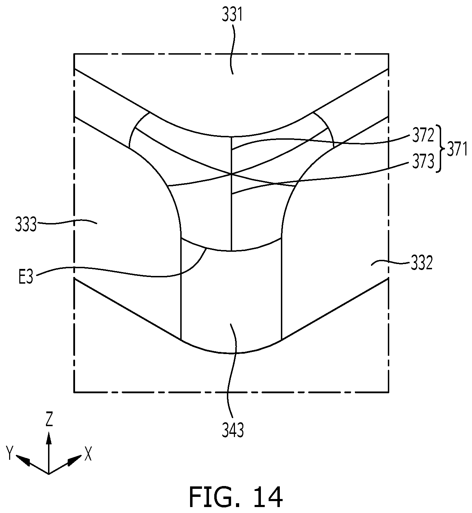

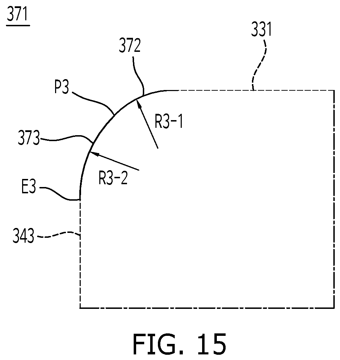

FIG. 14 is a perspective view illustrating an example of a third curve forming a corner in a case body of a secondary battery according to some embodiments of the present invention. FIG. 15 is a cross-sectional view illustrating an example of a cut portion of a third curve forming a corner in a case body of a secondary battery according to some embodiments of the present invention.

Referring to FIG. 4 to FIG. 15, a third curve 371 may be a form in which a plurality of curves having different radii of curvature are connected to each other. In some embodiments, the third curve 371 may include a (3-1)-th curve 372 connected to the bottom surface 331, and a (3-2)-th curve 373 extending from the (3-1)-th curve 372 and connected to an end point E3 of the third connection portion 343. The (3-1)-th curve 372 may have a (3-1)-th radius of curvature R3-1, and the (3-2)-th curve 373 may be formed to have a (3-2)-th radius of curvature R3-2.

The (3-1)-th radius of curvature R3-1 may be calculated by the following Equation 5. Equation 5: $R 3 - 1 = \left(R1+R2\right) / \left(D1+D2\right) \times V 5$

In Equation 5, R1 may be a first radius of curvature R1 of the first connection portion 341, and R2 may be a second radius of curvature R2 of the second connection portion 342. D1 may be a first interval D1 from an end point E1 of the first connection portion 341 to a start point S3 of a third radius of curvature R3 based on a first direction X. D2 may be a second interval D2 from an end point E2 of the second connection portion 342 to a start point S3 of a third radius of curvature R3 based on a second direction Y. V5 is a variable value (e.g., a set variable value), and may be about 1.2 to 1.4.

A first radius of curvature R1 and a second radius of curvature R2 are preset values, and one value may be selected from a range of about 1.2 to 1.4 for V5. A first interval D1 and a second interval D2 may be calculated by the method described above with reference to FIG. 8 and FIG. 9. A first interval D1 and a second interval D2 may be values in a range of about 1.0 mm to 3.5 mm.

The (3-2)-th radius of curvature R3-2 may be calculated by the following Equation 6. Equation 6: $R 3 - 2 = \left(R1+R2\right) / \left(D1+D2\right) \times V 6$

In Equation 6, R1 may be a first radius of curvature R1 of the first connection portion 341, and R2 may be a second radius of curvature R2 of the second connection portion 342. D1 may be a first interval D1 from an end point E1 of the first connection portion 341 to a start point S3 of a third radius of curvature R3 based on a first direction X. D2 may be a second interval D2 from an end point E2 of the second connection portion 342 to a start point S3 of a third radius of curvature R3 based on a second direction Y. V6 is a variable value (e.g., a set variable value), and may be about 3.3 to 4.5.

A first radius of curvature R1 and a second radius of curvature R2 are preset values, and one value may be selected from a range of about 3.3 to 4.5 for V6. A first interval D1 and a second interval D2 may be calculated by the method described above with reference to FIG. 8 and FIG. 9. A first interval D1 and a second interval D2 may be values in a range of about 1.0 mm to 3.5 mm.

Referring to FIG. 4 to FIG. 15, a vertex of the corner 344 of the first case 300 may be a point where the first curve 351, the second curve 361, and the third curve 371 cross or intersect each other.

The first curve 351 may include a first inflection point P1 where a radius of curvature changes. In some embodiments, the first inflection point P1 may be a point where the (1-1)-th curve 352 and the (1-2)-th curve 353 meet each other.

The second curve 361 may include a second inflection point P2 where a radius of curvature changes. In some embodiments, the second inflection point P2 may be a point where the (2-1)-th curve 362 and the (2-2)-th curve 363 meet each other.

The third curve 371 may include a third inflection point P3 where a radius of curvature changes. In some embodiments, the third inflection point P3 may be a point where the (3-1)-th curve 372 and the (3-2)-th curve 373 meet each other.

The vertex of the corner 344 may be a point where the first inflection point P1 of the first curve 351, the second inflection point P2 of the second curve 361, and the third inflection point P3 of the third curve 371 meet each other.

Although the present invention has been described with reference to embodiments and drawings illustrating aspects thereof, the present invention is not limited thereto. Various modifications and variations can be made by a person skilled in the art to which the present invention belongs within the scope of the technical spirit of the present invention and the claims and their equivalents, below.

**DESCRIPTION OF SOME REFERENCE SYMBOLS**

| | | | |
|---|---|---|---|
| 100 : | secondary battery | 200 : | electrode assembly |
| 300 : | first case | 331 : | bottom surface |
| 332 : | first side wall | 333 : | second side wall |
| 341 : | first connection portion | 342 : | second connection portion |
| 343 : | third connection portion | 344 : | corner |
| 351 : | first curve | 352 : | (1-1)-th curve |
| 353 : | (1-2)-th curve | 361 : | second curve |
| 362 : | (2-1)-th curve | 363 : | (2-2)-th curve |
| 371 : | third curve | 372 : | (3-1)-th curve |
| 373 : | (3-2)-th curve | 400 : | second case |

## Claims

1. A secondary battery (100) comprising:
an electrode assembly (200);
a first case (300) having one open side, and accommodating the electrode assembly (200); and
a second case (400) sealing the one open side of the first case (300),
wherein the first case (300) comprises:
a bottom surface (331) on which the electrode assembly (200) is located; and
a side wall portion protruding in a vertical direction along a perimeter of the bottom surface (331), and
wherein at least one corner (344) defined by the bottom surface (331) and the side wall portion has a rounded shape in which a plurality of curves (351, 361, 371) cross each other.

2. The secondary battery (100) as claimed in claim 1, wherein the first case (300) comprises:
a first side wall (332) extending vertically from the bottom surface (331);
a first connection portion (341) connecting the bottom surface (331) and the first side wall (332) to each other, and having a first radius of curvature R1;
a second side wall (333) extending vertically from the bottom surface (331), and orthogonally located with respect to the first side wall (332);
a second connection portion (342) connecting the bottom surface (331) and the second side wall (333) to each other, and having a second radius of curvature R2; and
a third connection portion (343) connecting the first side wall (332) and the second side wall (333) to each other, and having a third radius of curvature R3.

3. The secondary battery (100) as claimed in claims 1 or 2, wherein the plurality of curves comprises:
a first curve (351) connecting a point (E1) where the first connection portion (341) ends and the second side wall (333) to each other in a first direction (X) parallel to the first side wall (332);
a second curve (361) connecting a point (E2) where the second connection portion (342) ends and the first side wall (332) to each other in a second direction (Y) parallel to the second side wall (333); and
a third curve (371) connecting a point (E3) where the third connection portion (343) ends and the bottom surface (331) to each other in a third direction (Z) perpendicular to the first direction (X) and the second direction (Y).

4. The secondary battery (100) as claimed in any one of the preceding claims, wherein the first curve (351) comprises a first inflection point (P1) where a radius of curvature changes, the second curve (361) comprises a second inflection point (P2) where a radius of curvature changes, the third curve (371) comprises a third inflection point (P3) where a radius of curvature changes, and a vertex of the corner (344) is defined by where the first inflection point (P1), the second inflection point (P2), and the third inflection point (P3) meet each other.

5. The secondary battery (100) as claimed in any one of the preceding claims , wherein the first curve (351) comprises:
a (1-1)-th curve (352) connected to the second side wall (333), and having a (1-1)-th radius of curvature R1-1; and
a (1-2)-th curve (353) extending from the (1-1)-th curve (352) and connected to the point (E1) where the first connection portion (341) ends, the (1-2)-th curve (353) having a (1-2)-th radius of curvature R1-2.

6. The secondary battery (100) as claimed in claim 5, wherein the (1-1)-th radius of curvature R1-1 has a value according to R1-1=(R2+R3)/(D2+D3)×V1,
where R2 is the second radius of curvature, R3 is the third radius of curvature, D2 is a second interval from the point (E2) where the second connection portion (342) ends to a point where the third radius of curvature starts based on the second direction (Y), D3 is a third interval from the point (E3) where the third connection portion (343) ends to a point where the second radius of curvature starts based on the third direction (Z), and V1 is 2.7 to 2.9.

7. The secondary battery (100) as claimed in any one of the preceding claims, wherein the second interval D2 and the third interval D3 are 1.0 mm to 3.5 mm.

8. The secondary battery (100) as claimed in any one of claims 1 to 5,
wherein the (1-2)-th radius of curvature R1-2 has a value according to $R 1 - 2 = \left(R2+R3\right) / \left(D2+D3\right) \times V 2 ,$ where R2 is the second radius of curvature, R3 is the third radius of curvature, D2 is a second interval from the point (E2) where the second connection portion (342) ends to a point where the third radius of curvature starts based on the second direction (Y), D3 is a third interval from the point (E3) where the third connection portion (343) ends to a point where the second radius of curvature starts based on the third direction (Z), and V2 is 2.8 to 3.1.

9. The secondary battery (100) as claimed in any one of the preceding claims, wherein the second curve (361) comprises:
a (2-1)-th curve (362) connected to the first side wall (332), and having a (2-1)-th radius of curvature R2-1; and
a (2-2)-th curve (363) extending from the (2-1)-th curve (362) and connected to the point (E2) where the second connection portion (342) ends, the (2-2)-th curve (363) having a (2-2)-th radius of curvature R2-2.

10. The secondary battery (100) as claimed in claim 9, wherein the (2-1)-th radius of curvature R2-1 has a value according to R2-1=(R1+R3)/(D1+D3)×V3,
where R1 is the first radius of curvature, R3 is the third radius of curvature, D1 is a first interval from the point (E1) where the first connection portion (341) ends to a point where the third radius of curvature starts based on the first direction (X), D3 is a third interval from the point (E3) where the third connection portion (343) ends to a point where the second radius of curvature starts based on the third direction (Z), and V3 is 2.7 to 2.9.

11. The secondary battery (100) as claimed in any one of the preceding claims, wherein the first interval D1 and the third interval D3 are 1.0 mm to 3.5 mm.

12. The secondary battery (100) as claimed in any one of claims 1 to 4 or 9, wherein the (2-2)-th radius of curvature R2-2 has a value according to $R 2 - 2 = \left(R1+R3\right) / \left(D1+D3\right) \times V 4 ,$ where R1 is the first radius of curvature, R3 is the third radius of curvature, D1 is a first interval from the point (E1) where the first connection portion (341) ends to a point where the third radius of curvature starts based on the first direction (X), D3 is a third interval from the point (E3) where the third connection portion (343) ends to a point where the second radius of curvature starts based on the third direction (Z), and V4 is 2.8 to 3.1.

13. The secondary battery (100) as claimed in any one of the preceding claims, wherein the third curve (371) comprises:
a (3-1)-th curve (372) connected to the bottom surface (331), and having a (3-1)-th radius of curvature R3-1; and
a (3-2)-th curve (373) extending from the (3-1)-th curve (372) and connected to the point (E3) where the third connection portion (343) ends, the (3-2)-th curve (373) having a (3-2)-th radius of curvature R3-2.

14. The secondary battery (100) as claimed in claim 13, wherein the (3-1)-th radius of curvature R3-1 has a value according to R3-1=(R1+R2)/(D1+D2)×V5,
where R1 is the first radius of curvature, R2 is the second radius of curvature, D1 is a first interval from the point (E1) where the first connection portion (341) ends to a point where the third radius of curvature starts based on the first direction (X), D2 is a second interval from the point (E2) where the second connection portion (342) ends to a point where the third radius of curvature starts based on the second direction (Y), and V5 is 1.2 to 1.4.

15. The secondary battery (100) as claimed in any one of claims 1 to 4 or 13, wherein the (3-2)-th radius of curvature R3-2 has a value according to $R 3 - 2 = \left(R1+R2\right) / \left(D1+D2\right) \times V 6 ,$ where R1 is the first radius of curvature, R2 is the second radius of curvature, D1 is a first interval from the point (E1) where the first connection portion (341) ends to a point where the third radius of curvature starts based on the first direction (X), D2 is a from the point (E2) where the second connection portion (342) ends to a point where the third radius of curvature starts based on the second direction (Y), and V6 is 3.3 to 4.5.
